# EUROPEAN PATENT APPLICATION

(11) **EP 4 306 392 A1**
(43) Date of publication of application: **17.01.2024**
(21) Application number: 22196540.3
(22) Date of filing: 20.09.2022
(51) Int. Cl.: B62H 1/02, B62K 19/30

(54) **BICYCLE ACCESSORY FASTENING STRUCTURE**

(30) Priority: 15.07.2022 CN 202210832143; 15.07.2022 CN 202210832145
(71) Applicant: Tsai Jung Enterprise Co., Ltd., Changhua County 509004 (TW)
(72) Inventor: TENG, Chang-Sheng, Guangdong 523640 (CN)
(74) Representative: Cabinet Chaillot

(57) **Abstract**

A bicycle accessory fastening structure is mainly applied to fasten a bicycle accessory on a bicycle. In the bicycle accessory fastening structure, recessed grooves formed on the bicycle and stabilizing blocks disposed on a mounting part are assembled with each other, so that the mounting part is stably on the bicycle and not easy to loosen, and a bicycle accessory can be mounted on the mounting part. The structure increases the stability of the combination of the bicycle accessory and the bicycle to extend a service life. Compared with the conventional technology, the bicycle accessory fastening structure can more stably assemble the bicycle accessory with the bicycle, and the assembling difficulty is still low, so that it is more applicable for a user to mount an accessory on a bicycle.

## Description

### BACKGROUND OF THE INVENTION

### 1. Field of the Invention

The present invention relates to a bicycle field, and particularly to a fastening structure for a bicycle and a bicycle accessory.

### 2. Description of the Related Art

With the progress of technology, modern people are quite satisfied with the basic food, clothing, housing, and transportation, and begin to move forward in the direction of self-realization, and the rise of the sports trend also follows this direction. In addition, people are interested in bicycles that can carry out transportation and exercise, so the bicycle industry has a trend of becoming more and more sophisticated.

In general, not like a motorcycle having a center pillar and a side pillar directly disposed thereon to assist in parking, a bicycle is usually additionally provided with a parking post locked on a rear frame thereof to assist in parking. However, the extra parking post is difficult in disassembly and assembly, and the assembled structure is not stable enough and may be loosened from a bicycle frame in a short period of time with continuous use.

Therefore, manufacturers developed different types of parking structures, for example, an assembly piece is disposed on a hook part of a bicycle frame, and a parking post is installed on the hook part of the bicycle frame through a through shaft, so that the parking post is more stably disposed on a rear wheel of the bicycle to increase the life time of the parking post.

However, the above-mentioned conventional solution needs to mount an additional assembly piece on the hook part of the bicycle, and it is quite difficult and expensive to mount the assembly piece; furthermore, when the assembly piece is improperly mounted, the parking post may be easily loosened.

In addition, a conventional bicycle rear shelf is usually fastened by a through shaft and screws only, so the conventional bicycle rear shelf is easily affected to loosen by the separation force caused by vibration of the bicycle after a period of use, and it may cause danger and is unsatisfactory in durability.

### SUMMARY OF THE INVENTION

An objective of the present invention is to provide a bicycle accessory fastening structure in which recessed grooves disposed on a bicycle and stabilizing blocks disposed on a mounting part are assembled with each other, so that the mounting part can be stably mounted on the bicycle and not easy to loosen, and the bicycle accessory can be mounted on the mounting part; the structure is able to increase the stability of the combination of the bicycle accessory and the bicycle to extend the service life, and the assembly difficulty is still low, so that it is more applicable for a user to mount bicycle with accessories.

In order to achieve the object, the present invention provides a bicycle accessory fastening structure configured to mount to a bicycle frame, wherein the bicycle frame comprises a first hook part and a second hook part, the first hook part has an outer surface facing toward outside, and an assembly hole cut through the outer surface, the outer surface has recessed grooves arranged in interval on a peripheral side of the assembly hole, wherein the bicycle accessory fastening structure includes a mounting part, a through shaft and a parking post. The mounting part is disposed on an outer side of the outer surface and includes a ring part disposed on an end thereof and a pivot hole formed on other end thereof, wherein the ring part includes an inner surface facing toward the outer surface, an assembly hole formed thereon and in communication with the inner surface, and stabilizing blocks disposed on the inner surface and arranged in interval on a peripheral side of the assembly hole, the stabilizing blocks correspond in position to the recessed grooves and are located in the recessed grooves, respectively. The through shaft is inserted through the assembly hole and the assembly hole, so as to assemble the mounting part with the first hook part. The parking post is pivoted in the pivot hole.

In order to achieve the objective, the present invention provides a bicycle accessory fastening structure configured to mount to a bicycle frame, wherein the bicycle frame includes an external part disposed thereon, the external part has a first assembly surface, and an assembly hole disposed thereon, the first assembly surface has recessed grooves disposed thereon and arranged in interval on a peripheral side of the assembly hole, wherein the bicycle accessory fastening structure comprises a mounting part, a fastener and a parking post. The mounting part is disposed on a side of the first assembly surface, and includes a ring part disposed on an end thereof and a pivot hole formed on other end thereof, wherein the ring part comprises a second assembly surface facing toward the first assembly surface, and an assembly hole formed thereon and in communication with the second assembly surface, the second assembly surface has stabilizing blocks disposed on a side of the assembly hole and arranged in interval. The stabilizing blocks correspond in position to the recessed grooves and are located in the recessed grooves, respectively. The fastener is inserted through the assembly hole and the assembly hole, to fasten the mounting part on the external part. The parking post is pivoted in the pivot hole.

In order to achieve the objective, the present invention provides a bicycle accessory fastening structure configured to mount to a bicycle frame, wherein the bicycle frame comprises a first hook part and a second hook part, each of the first hook part and the second hook part includes an outer surface facing toward outside, and an assembly hole cut through the outer surface, the outer surface has recessed grooves arranged in interval on a peripheral side of the assembly hole, wherein the bicycle accessory fastening structure includes rear shelf and a through shaft. The rear shelf includes a first assembly part and a second assembly part, wherein each of the first assembly part and the second assembly part comprises an inner surface facing toward a corresponding one of the outer surfaces, and an assembly hole cut through the inner surface, wherein the inner surface has stabilizing blocks arranged in interval on the peripheral side of the assembly hole, the stabilizing blocks correspond in position to the recessed grooves and are located in the recessed grooves, respectively. The through shaft is inserted through the assembly hole and the assembly hole, and the first assembly part and the second assembly part are assembled with the first hook part and the second hook part.

In order to achieve the objective, the present invention provides a bicycle accessory fastening structure configured to mount to a bicycle frame, wherein the bicycle frame comprises an central shaft, the central shaft comprises an external assembly part disposed on a side thereof, the external assembly part has an end having an outer surface, and an assembly hole axially cut through the outer surface, and the outer surface has recessed grooves disposed thereon and arranged in interval on the peripheral side of the assembly hole, wherein the bicycle accessory fastening structure includes a mounting part, a fastener and a parking post. The mounting part is disposed on a side of the outer surface and includes a ring part disposed on an end thereof, and a pivot hole formed on other end thereof, wherein the ring part has an inner surface facing toward the outer surface, and an assembly hole formed thereon and in communication with the inner surface, the inner surface has stabilizing blocks disposed on a side of the assembly hole and arranged in interval, the stabilizing blocks correspond in position to the recessed grooves and located in the recessed grooves, respectively. The fastener is inserted through the assembly hole and the assembly hole, to fasten the mounting part on the external assembly part. The parking post is pivoted in the pivot hole

### BRIEF DESCRIPTION OF THE DRAWINGS

The structure, operating principle and effects of the present invention will be described in detail by way of various embodiments which are illustrated in the accompanying drawings.
Fig. 1 is an exploded view of a first embodiment of the present invention.
Fig. 2 is an enlarged view of a part of Fig. 1, according to the present invention.
Fig. 3 is a perspective view of the first embodiment of the present invention.
Fig. 4 is an axial sectional view taken along IV-IV of Fig. 3, according to the present invention.
Fig. 5 is a sectional view taken along V-V of Fig. 3, according to the present invention.
Fig. 6 is a schematic view of an actual usage of the first embodiment of the present invention.
Fig. 7 is an exploded view of a second embodiment of the present invention.
Fig. 8 is a perspective view of the second embodiment of the present invention.
Fig. 9 is an axial sectional view taken along IX-IX of Fig. 8, according to the present invention.
Fig. 10 is a horizontal sectional view taken along X-X of Fig. 8, according to the present invention.
Fig. 11 is an exploded view of other type of stabilizing blocks of the second embodiment, according to the present invention.
Fig. 12 is a schematic view of an actual usage of the second embodiment, according to the present invention.
Fig. 13 is an exploded view of another assembly of the second embodiment, according to the present invention.
Fig. 14 is a perspective view of another assembly of the second embodiment, according to the present invention.
Fig. 15 is a schematic view of actual usage of another assembly of second embodiment, according to the present invention.
Fig. 16 is an exploded view of a third embodiment of the present invention.
Fig. 17 is an exploded view of the third embodiment of the present invention, when viewed from another angle.
Fig. 18 is an enlarged view of a part of Fig. 17, according to the present invention.
Fig. 19 is a perspective view of the third embodiment of the present invention.
Fig. 20 is an axial sectional view taken along XX-XX of Fig. 19, according to the present invention.
Fig. 21 is a horizontal sectional view taken along XXI- XXI of Fig. 19, according to the present invention.
Fig. 22 is an exploded view of an extension part of the third embodiment, according to the present invention.
Fig. 23 is a perspective view of the extension part of the third embodiment, according to the present invention.
Fig. 24 is an exploded view of a fourth embodiment of the present invention.
Fig. 25 is an enlarged view of a part of Fig. 24, according to the present invention.
Fig. 26 is a perspective view of the fourth embodiment, according to the present invention.
Fig. 27 is an axial sectional view taken along XXVII- XXVII of Fig. 26, according to the present invention.
Fig. 28 is a horizontal sectional view taken along XXVIII-XXVIII of Fig. 26, according to the present invention.

### DETAILED DESCRIPTION OF THE PREFERRED EMBODIMENTS

The following embodiments of the present invention are herein described in detail with reference to the accompanying drawings. These drawings show specific examples of the embodiments of the present invention. These embodiments are provided so that this disclosure will be thorough and complete, and will fully convey the scope of the invention to those skilled in the art. It is to be acknowledged that these embodiments are exemplary implementations and are not to be construed as limiting the scope of the present invention in any way. Further modifications to the disclosed embodiments, as well as other embodiments, are also included within the scope of the appended claims.

These embodiments are provided so that this disclosure is thorough and complete, and fully conveys the inventive concept to those skilled in the art. Regarding the drawings, the relative proportions and ratios of elements in the drawings may be exaggerated or diminished in size for the sake of clarity and convenience. Such arbitrary proportions are only illustrative and not limiting in any way. The same reference numbers are used in the drawings and description to refer to the same or like parts. As used herein, the singular forms "a", "an" and "the" are intended to include the plural forms as well, unless the context clearly indicates otherwise.

It is to be acknowledged that, although the terms 'first', 'second', 'third', and so on, may be used herein to describe various elements, these elements should not be limited by these terms. These terms are used only for the purpose of distinguishing one component from another component. Thus, a first element discussed herein could be termed a second element without altering the description of the present disclosure. As used herein, the term "or" includes any and all combinations of one or more of the associated listed items.

It will be acknowledged that when an element or layer is referred to as being "on," "connected to" or "coupled to" another element or layer, it can be directly on, connected or coupled to the other element or layer, or intervening elements or layers may be present. In contrast, when an element is referred to as being "directly on," "directly connected to" or "directly coupled to" another element or layer, there are no intervening elements or layers present.

In addition, unless explicitly described to the contrary, the words "comprise" and "include", and variations such as "comprises", "comprising", "includes", or "including", will be acknowledged to imply the inclusion of stated elements but not the exclusion of any other elements.

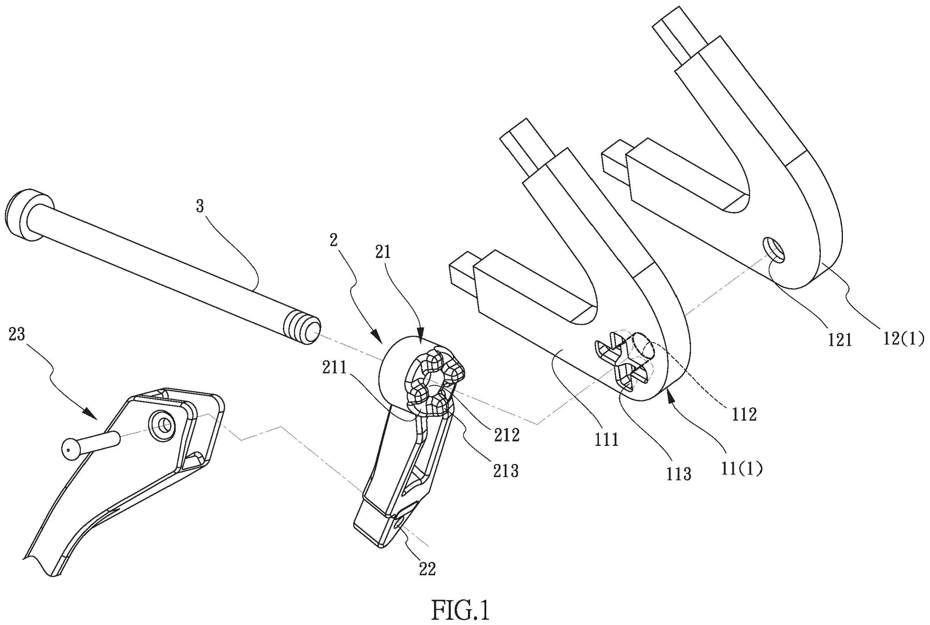

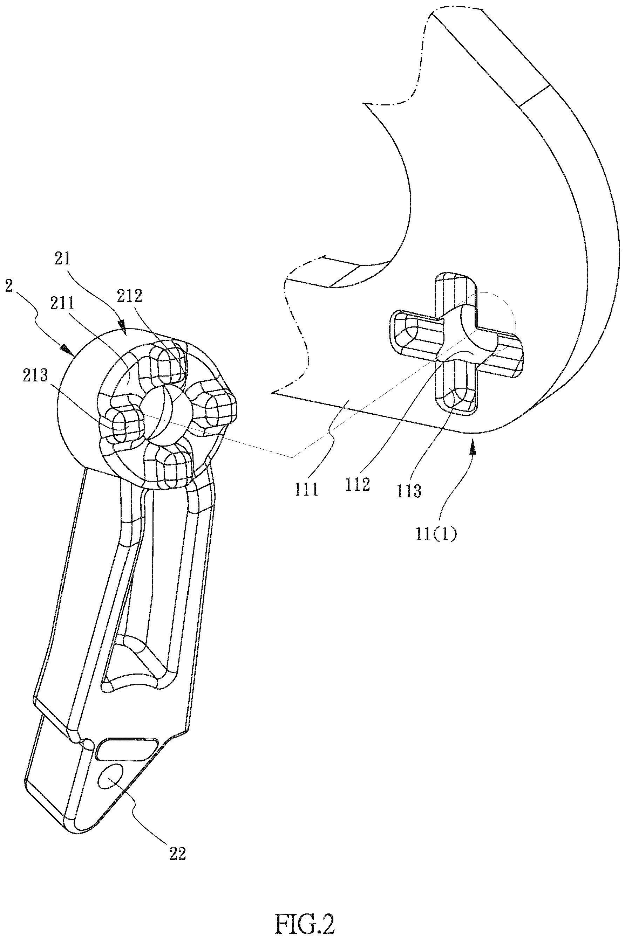

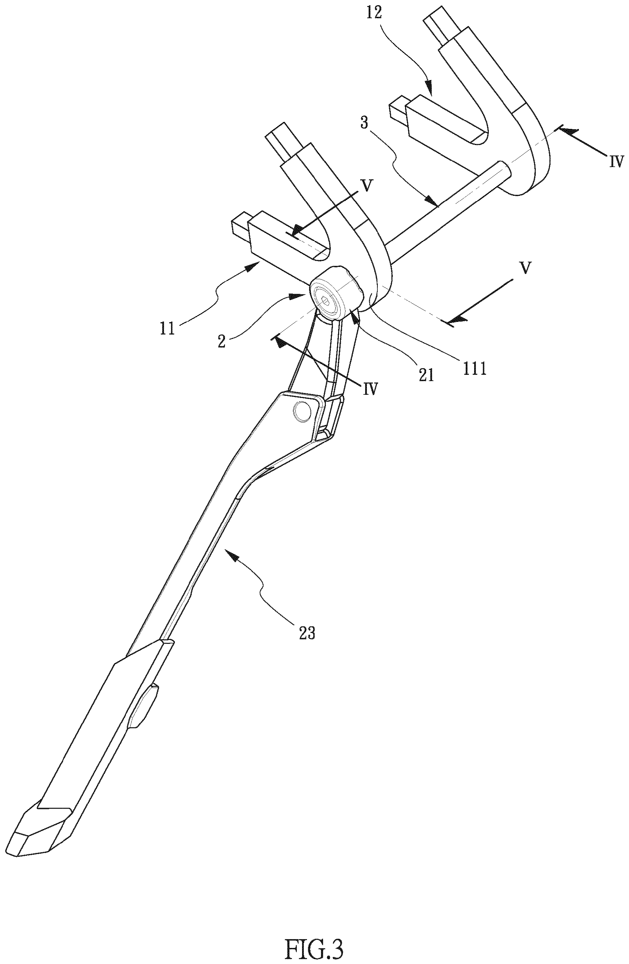

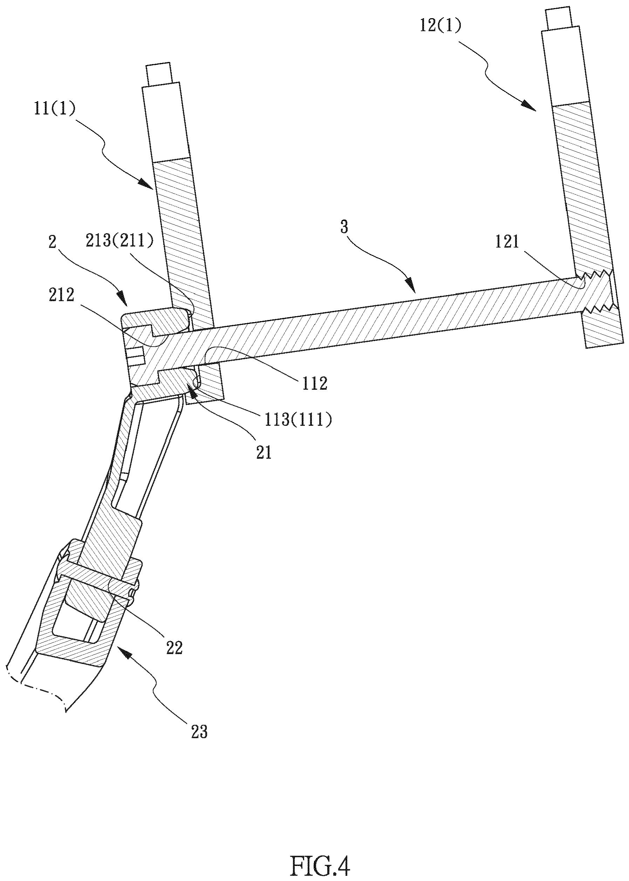

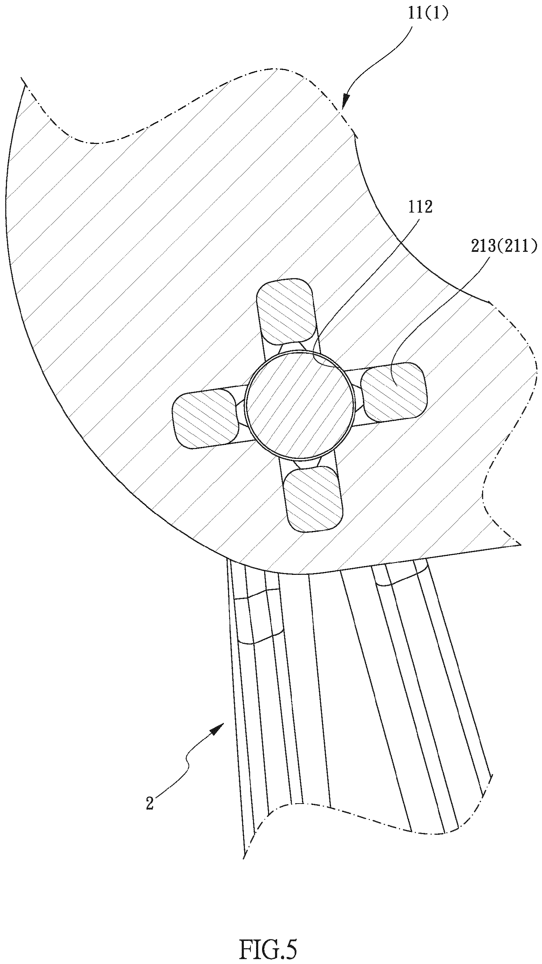

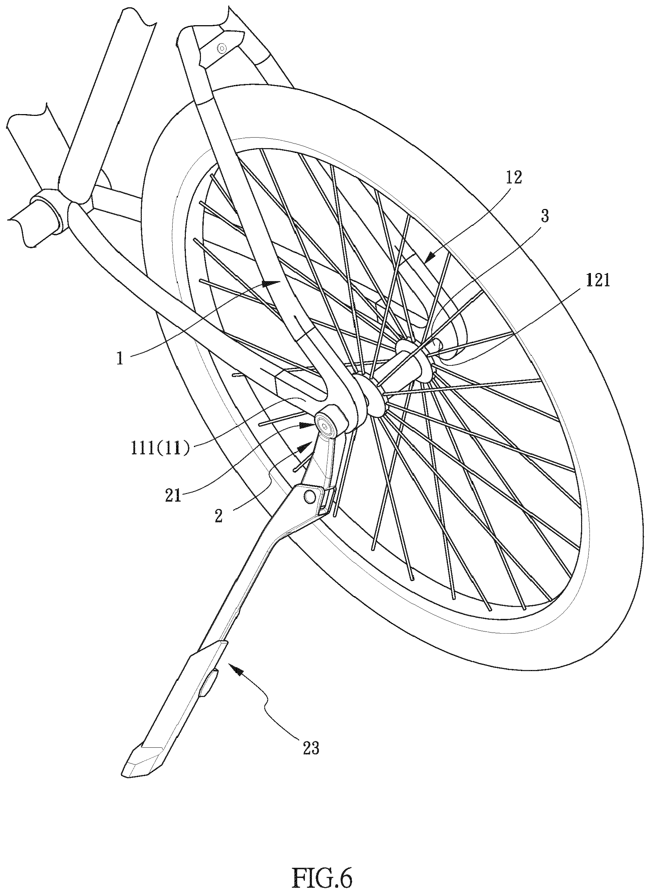

Please refer to Figs. 1 to 6, which show a first embodiment of the present invention. The first embodiment is a parking post fastening structure configured to mount on a bicycle frame 1, and the parking post fastening structure includes a mounting part 2, a through shaft 3, and a parking post 23. The bicycle frame 1 includes a first hook part 11 and a second hook part 12, the first hook part 11 has an outer surface 111 facing toward outside, and an assembly hole 112 cut through the outer surface 111. In addition, the outer surface 111 has recessed grooves 113 disposed on a peripheral side of the assembly hole 112 and arranged in interval. The second hook part 12 has a fastening hole 121 formed correspondingly in position to the first hook part 11.

The mounting part 2 is disposed on an outer side of the outer surface 111, and the mounting part 2 has a ring part 21 disposed on an end thereof, and a pivot hole 22 formed on other end thereof. The ring part 21 includes an inner surface 211 facing toward the outer surface 111, and an assembly hole 212 formed thereon and in communication with the inner surface 211. The inner surface 211 has stabilizing blocks 213 disposed thereon and arranged in interval on the peripheral side of the assembly hole 212, the stabilizing blocks 213 correspond in position to the recessed grooves 113 and located in the recessed grooves 113, respectively.

The through shaft 3 is inserted through the assembly hole 212, the assembly hole 112, and the fastening hole 121, so as to assemble the mounting part 2 with the first hook part 11; in addition, the parking post 23 is pivoted in the pivot hole 22.

As shown Figs. 1 to 6, each of the recessed grooves 113 of this embodiment is recessed in a shape gradually narrowed in a direction opposite to the outer surface 111, and each of the stabilizing blocks 213 is gradually narrowed in a direction opposite to the inner surface 211, and this structure prevents the mounting part 2 and the first hook part 11 from being separated in structure during vibration, so as to improve the durability of the combination of the mounting part 2 and the first hook part 11.

As shown Figs. 1 to 6, the recessed grooves 113 of this embodiment are in communication with the assembly hole 112, and parts of the stabilizing block 213 are connected to the assembly hole 212, so that when the through shaft 3 is inserted through the assembly hole 112 and the assembly hole 212, this structure makes the stabilizing block 213 be stably inserted in the recessed groove 113, to increases the stability of the combination of the mounting part 2 and the first hook part 11.

In practical use, as shown Figs. 1 to 6, a user first places the stabilizing blocks 213 of the mounting part 2 into the recessed grooves 113 on the outer surface 111 of the first hook part 11, to abut the outer surface 111 with the inner surface 211; next, the user inserts the through shaft 3 through the assembly hole 112 of the first hook part 11, the assembly hole 212 of the ring part 21, and the fastening hole 121 of the second hook part 12, to stably fasten the mounting part 2 on the first hook part 11. Therefore, when the user frequently kicks the parking post 23 pivoted in the pivot hole 22 for a long time, the combination of the stabilizing blocks 213 and the recessed grooves 113 decreases the vibration separation force applied on the mounting part 2 and the first hook part 11, so as to prevent the mounting part 2 and the first hook part 11 from being separated easily, thereby improving the durability and the lifetime of the bicycle accessory fastening structure of the present invention.

The aforementioned contents are the main technical features of the main embodiment of the present invention, and the main technical features correspond to content of claim 1 of the patent invention, to explain the purpose and implementation of the present invention in detail; the technical features described in the dependent claims are the detailed description of the content of claim 1 or appended technical features, and not to limit the scope of claim 1 of the patent invention. It should be noted that claim 1 is not necessarily to include the technical features described in dependent claims.

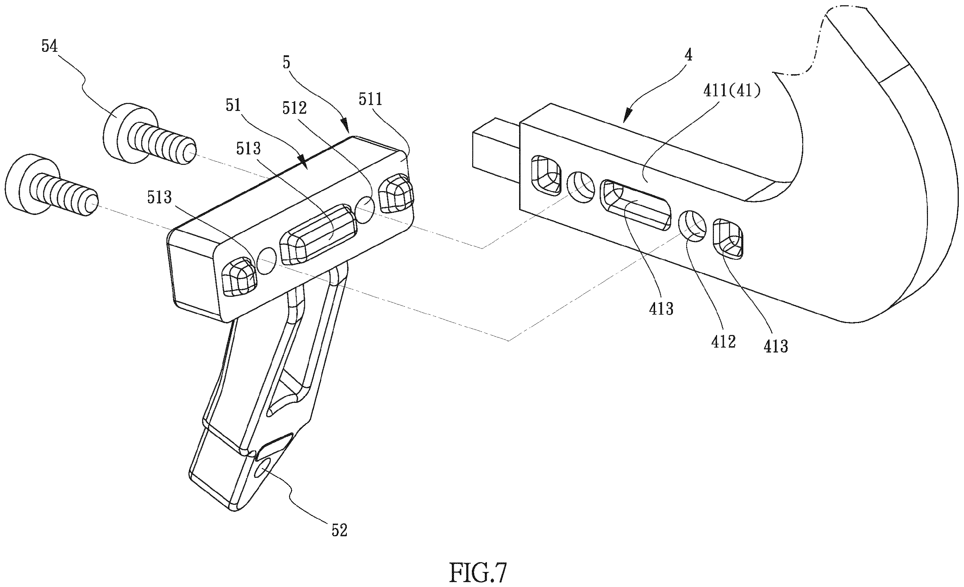

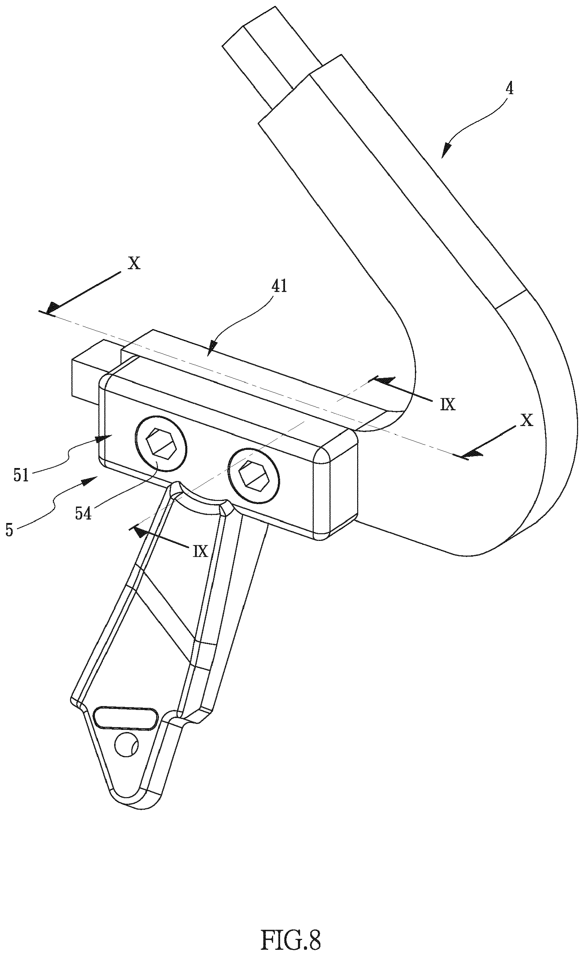

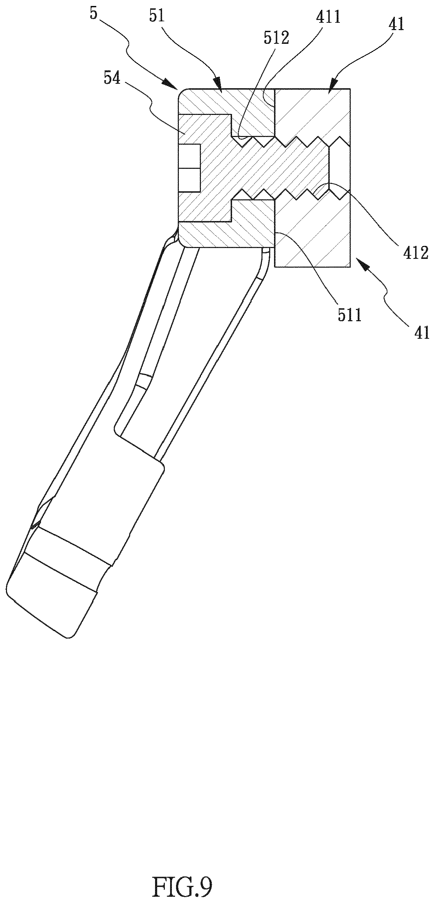

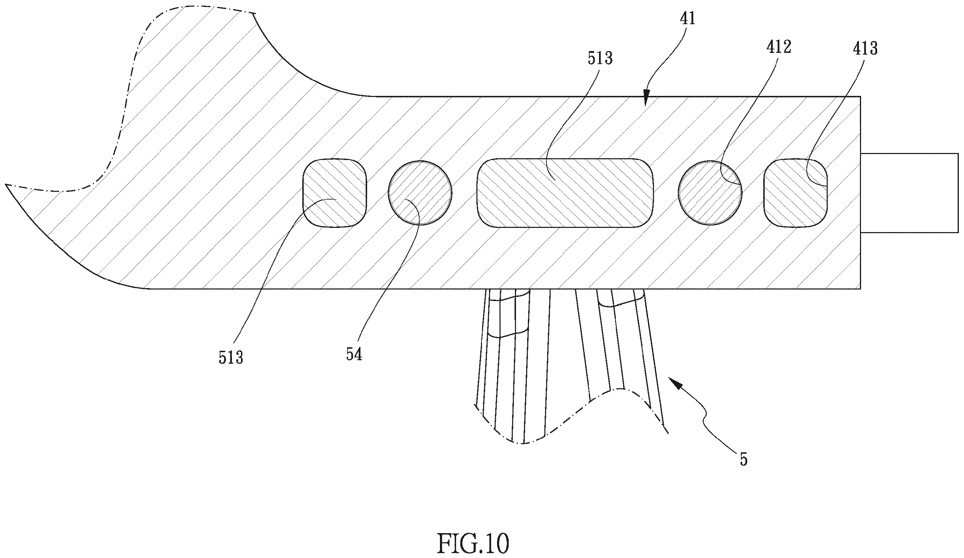

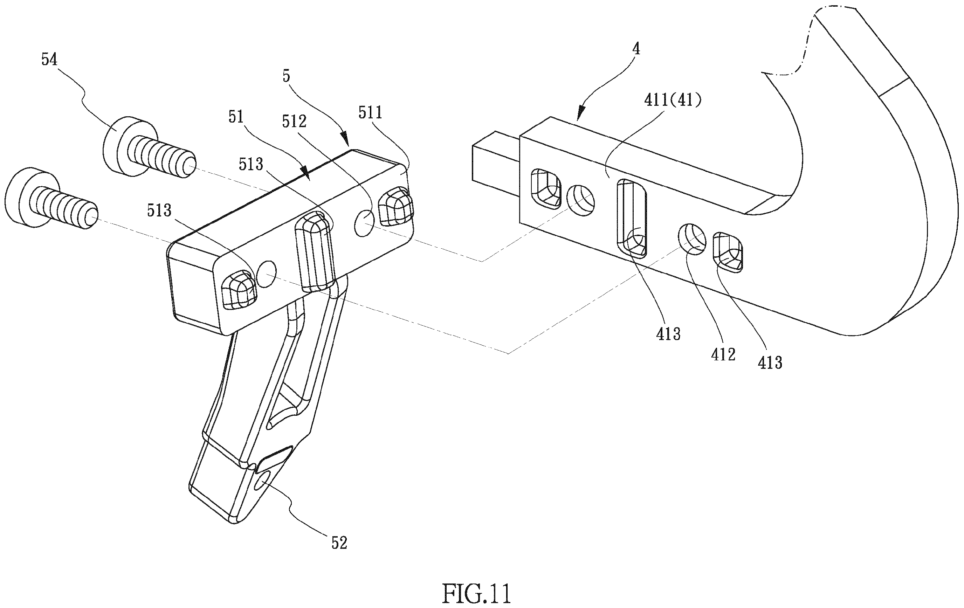

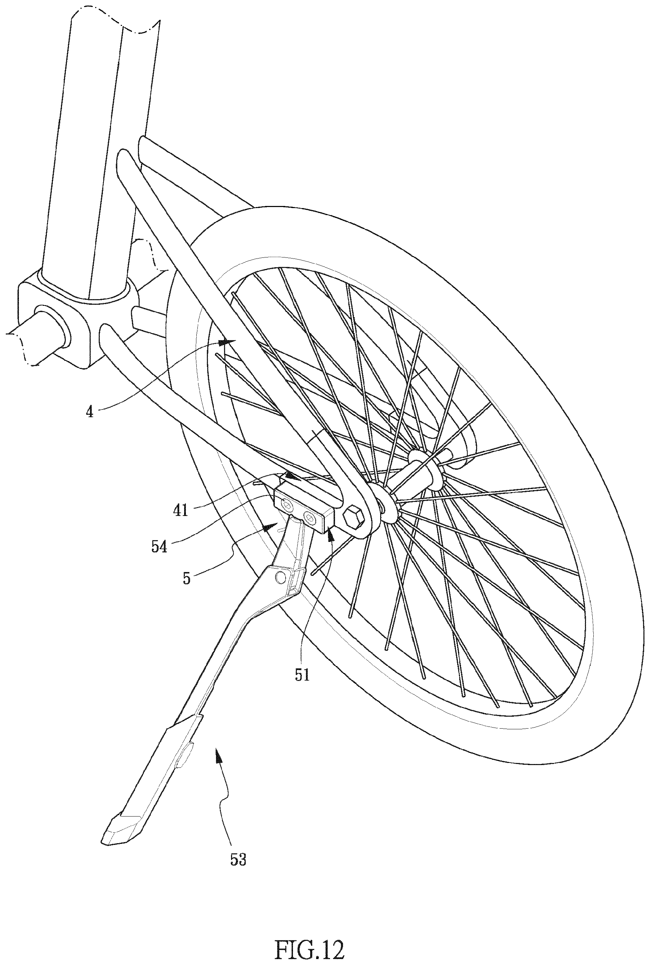

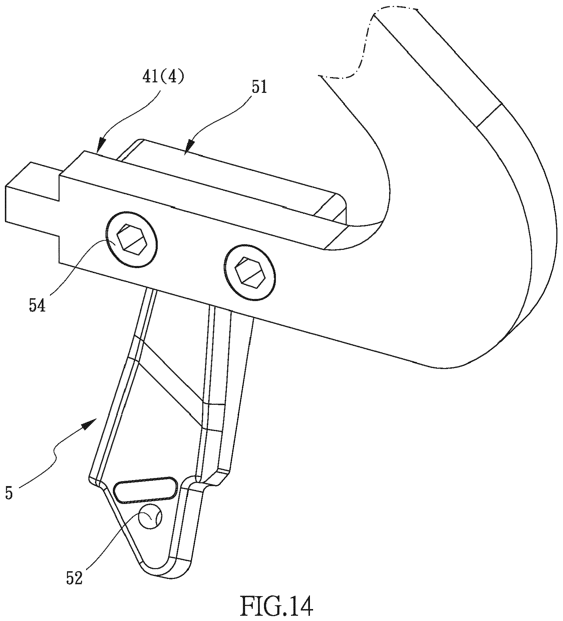

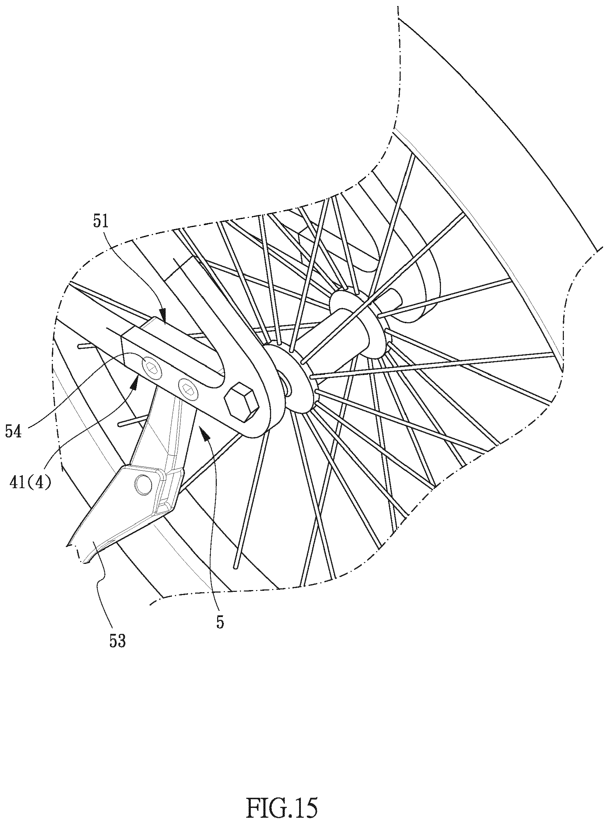

The features of components of the present invention will be described in detail in the following paragraphs. Please refer to Figs. 7 to 15, which show a second embodiment of the present invention. The second embodiment is configured to mount on the bicycle frame 4 and includes a mounting part 5 and a parking post 53. The bicycle frame 4 includes an external part 41 disposed thereon, the external part 41 has a first assembly surface 411 disposed thereon, and an assembly hole 412 disposed thereon. The first assembly surface 411 has recessed grooves 413 disposed thereon and arranged in interval on the peripheral side of the assembly hole 412.

The mounting part 5 is disposed on a side of the first assembly surface 411, and the mounting part 5 has a ring part 51 disposed on an end thereof, and a pivot hole 52 formed on other end thereof. The ring part 51 has a second assembly surface 511 facing toward the first assembly surface 411, and an assembly hole 512 formed thereon and in communication with the second assembly surface 511. The second assembly surface 511 has stabilizing blocks 513 disposed on a side of the assembly hole 512 and arranged in interval. The stabilizing blocks 513 correspond in position to the recessed grooves 413 and located in the recessed grooves 413, respectively.

In addition, the parking post 53 is pivoted in the pivot hole 52, and in this embodiment, the fastener 54 is inserted into the assembly hole 512 to assemble the mounting part 5 in the assembly hole 412 of the external part 41, so as to fasten the mounting part 5 on the external part 41.

Please refer to Figs. 7 to 15, each of the recessed grooves 413 of this embodiment is recessed in a shape gradually narrowed in a direction opposite to the first assembly surface 411, each of the stabilizing blocks 513 is gradually narrowed in a direction opposite to the second assembly surface 511, so this structure prevents the mounting part 5 and the external part 41 from being separated in structure during vibration, thereby improving the durability of the combination of the mounting part 5 and the external part 41.

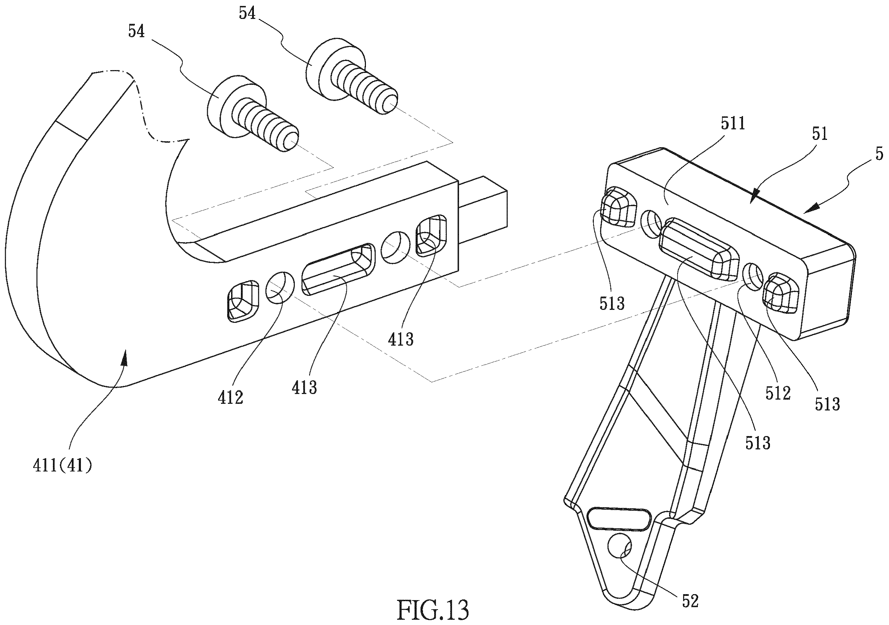

As shown in Figs. 7 to 15, in this embodiment, the first assembly surface 411 can be an inner surface or an outer surface of the external part 41, and the second assembly surface 511 can be an inner surface or an outer surface of the mounting part 5, so that the mounting part 5 can be mounted on the inner surface or the outer surface of the external part 41; as shown in Figs. 13 to 15, which are reference usage views showing the mounting part 5 mounted on different surfaces of the external part 41, respectively.

In practical use, as shown in Figs. 7 to 15, a user first places the stabilizing blocks 513 of the mounting part 5 into the recessed grooves 413 on the first assembly surface 411 of the external part 41, respectively, and abut the first assembly surface 411 with the second assembly surface 511; next, the user inserts the fastener 54 through the assembly hole 512 of the ring part 51 to assemble the mounting part 5 in the assembly hole 412 of the external part 41, so as to stably fasten the mounting part 5 on the external part 41. Therefore, when the user frequently kicks the parking post 53 pivoted in the pivot hole 52 for a long time, the combination of the stabilizing block 513 and the recessed groove 413 decreases the vibration separation force applied on the mounting part 5 and the external part 41, so as to prevent the mounting part 5 and the external part 41 from being separated easily, thereby improving the durability and the lifetime of bicycle accessory fastening structure and the present invention.

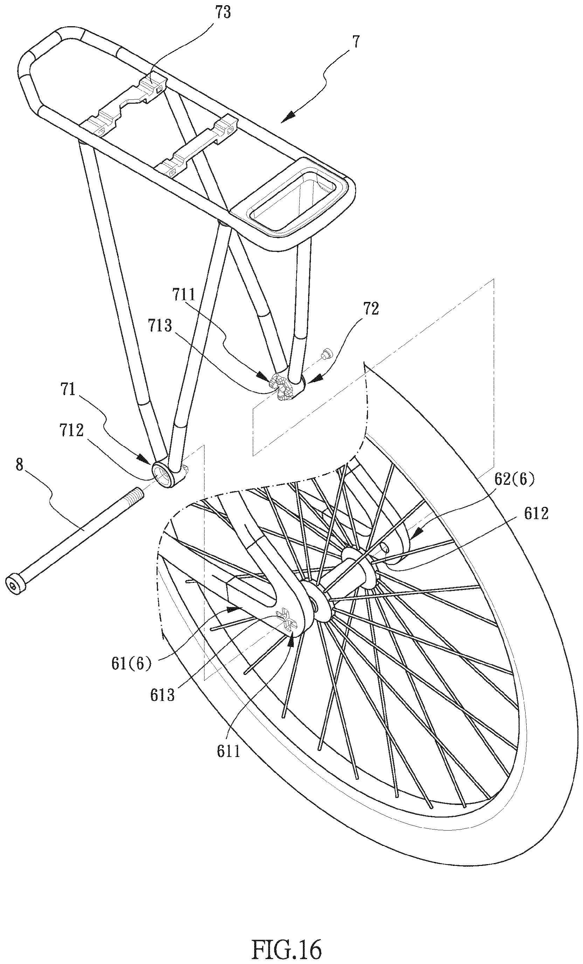

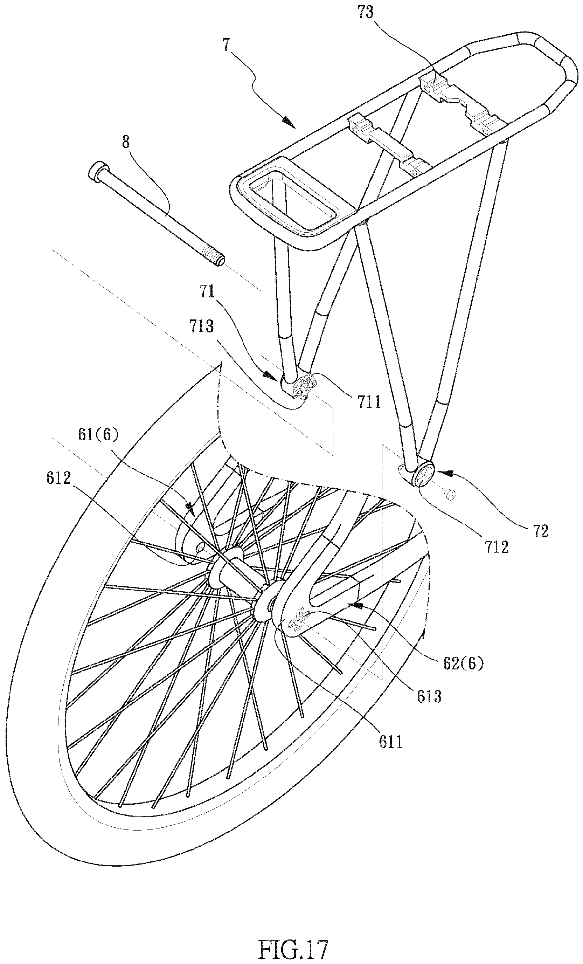

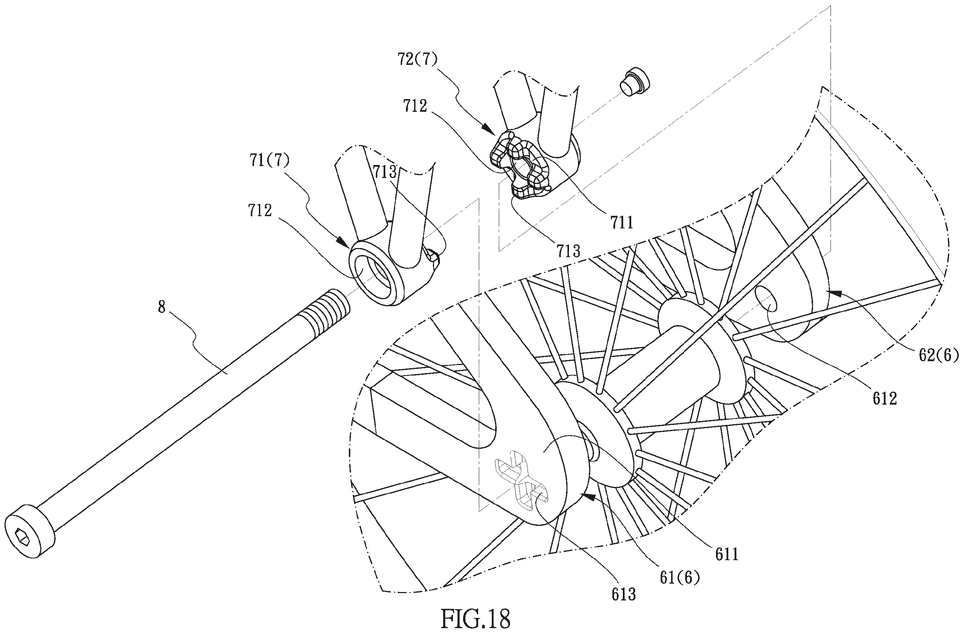

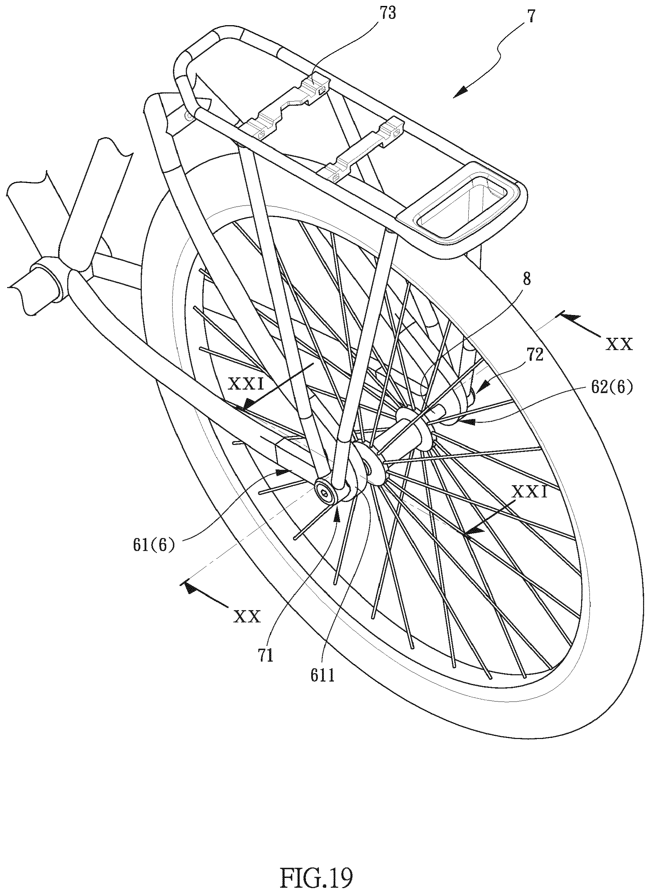

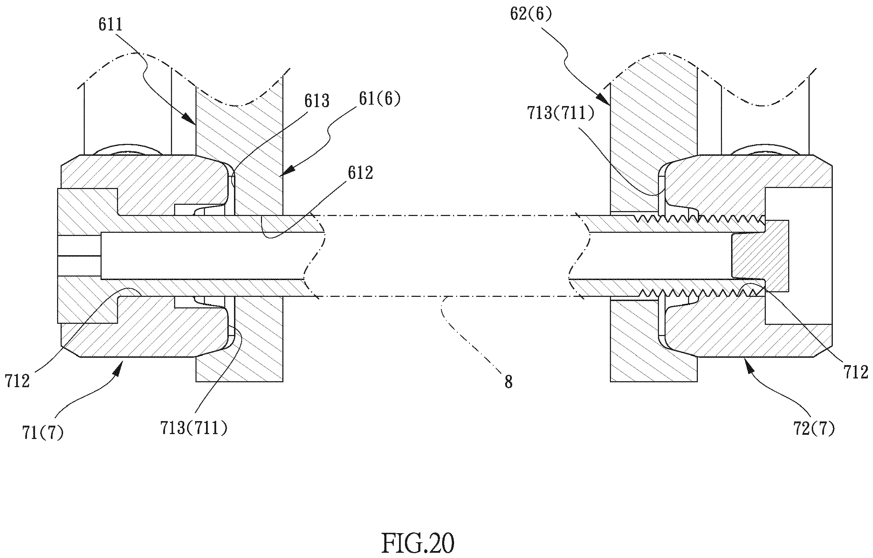

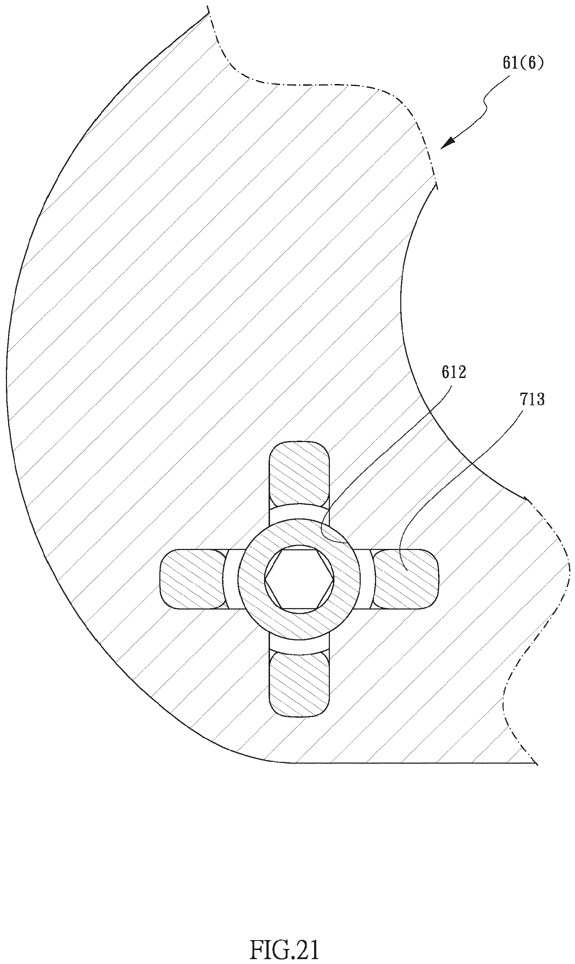

Please refer to Fig. 16 to 23, which show a third embodiment of the present invention. The third embodiment is configured to mount on the bicycle frame 6, and includes a rear shelf 7 and a through shaft 8. The bicycle frame 6 includes a first hook part 61 and a second hook part 62, each of the first hook part 61 and the second hook part 62 has an outer surface 611 facing toward outside, and an assembly hole 612 cut through the outer surface 611. The outer surface 611 has recessed grooves 613 arranged in interval on the peripheral side of the assembly hole 612.

The rear shelf 7 includes a first assembly part 71, a second assembly part 72, and a cargo loading part 73 disposed thereon. Each of the first assembly part 71 and the second assembly part 72 has an inner surface 711 facing toward the corresponding outer surface 611, and an assembly hole 712 cut through the inner surface 711. The inner surface 711 has stabilizing blocks 713 arranged in interval on the peripheral side of the assembly hole 712, the stabilizing blocks 713 correspond in position to the recessed grooves 613 and located in the recessed grooves 613, respectively. The cargo loading part 73 is configured to carry goods.

The through shaft 8 is inserted through the assembly hole 712 and the assembly hole 612, and the first assembly part 71 and the second assembly part 72 are assembled with the first hook part 61 and the second hook part 62, so as to stably mount the rear shelf 7 on the bicycle frame 6.

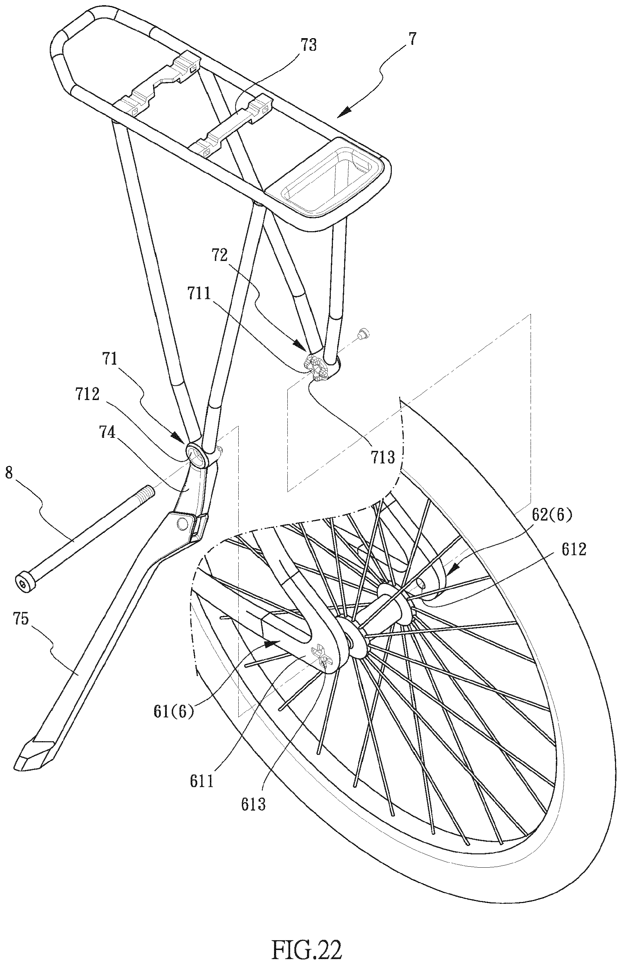

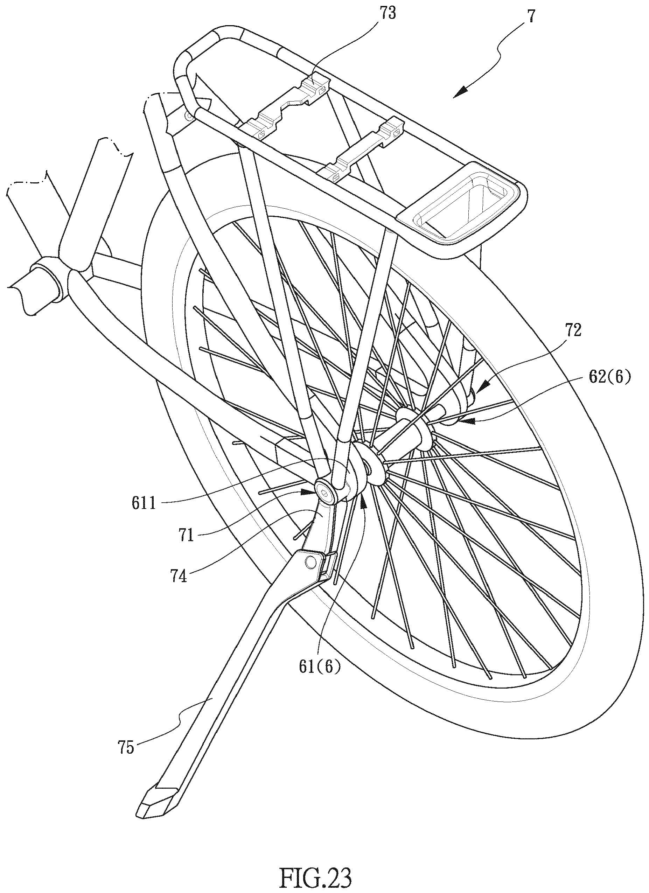

As shown in Figs. 22 and 23, in this embodiment, the first assembly part 71 or the second assembly part 72 includes an extension part 74, and an end of the extension part 74 is connected to the corresponding one of the first assembly part 71 and the second assembly part 72, and the extension part 74 has a pivot hole 741 formed on other end thereof. The rear shelf 7 includes a parking post 75 pivoted in the pivot hole 741 and configured to assist in parking the bicycle.

As shown in Fig. 16 to 23, each of the recessed groove 613 of this embodiment is recessed in a shape gradually narrowed in a direction opposite to the outer surface 611, each of the stabilizing blocks 713 is gradually narrowed in a direction opposite to the inner surface 711, so this structure prevents the first assembly part 71 and the second assembly part 72, and the first hook part 61 and the second hook part 62 from being separated in structure during vibration, thereby improving the durability of the combination of the rear shelf 7 and the bicycle frame 6.

As shown in Fig. 16 to 23, the recessed grooves 613 of this embodiment are in communication with the assembly hole 612, and parts of the stabilizing blocks 713 are connected to the assembly hole 712, so that this structure is able to make the stabilizing blocks 713 be stably inserted in the recessed grooves 613, to increase the robustness of the combination of the first assembly part 71 and the second assembly part 72, and combination of the first hook part 61 and the second hook part 62, when the through shaft 8 is inserted through the assembly hole 612 and the assembly hole 712.

In practical use, as shown in Fig. 16 to 23, the user first places the stabilizing blocks 713 of the first assembly part 71 and the second assembly part 72 into the recessed grooves 613 on the outer surfaces 611 of the first hook part 61 and the second hook part 62, and abuts the outer surface 611 with the inner surface 711; next, the user inserts the through shaft 8 through the assembly holes 612 of the first hook part 61 and the second hook part 62 and the assembly holes 712 of the first assembly part 71 and the second assembly part 72 to stably fasten the rear shelf 7 on the bicycle frame 6. Therefore, when the user frequently uses the rear shelf 7 to carry goods for a long time, the combination of the stabilizing block 713 and the recessed groove 613 can reduce the vibration separation force applied on the first assembly part 71 and the second assembly part 72, and of the first hook part 61 and the second hook part 62, to prevent the rear shelf 7 and the bicycle frame 6 from being separated easily, thereby improving the durability and the lifetime of the rear shelf 7.

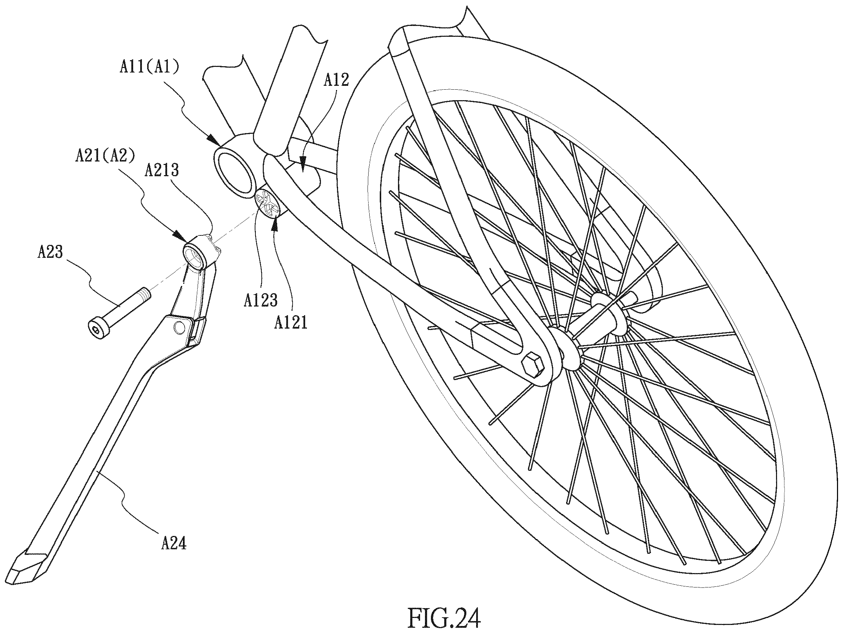

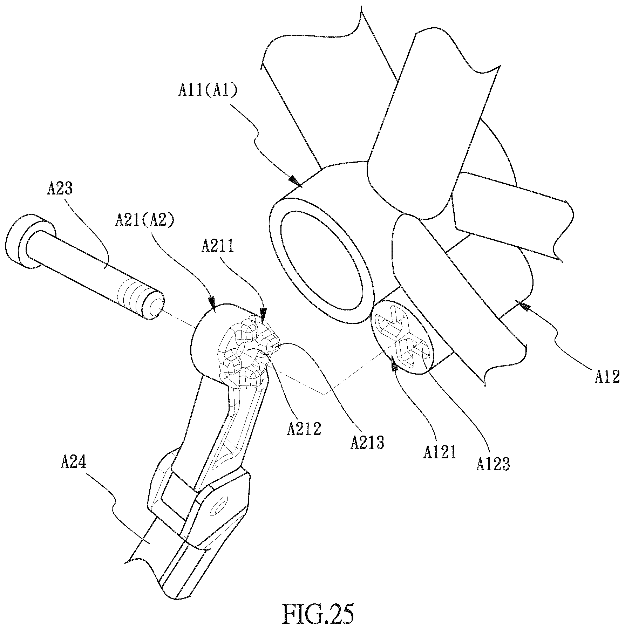

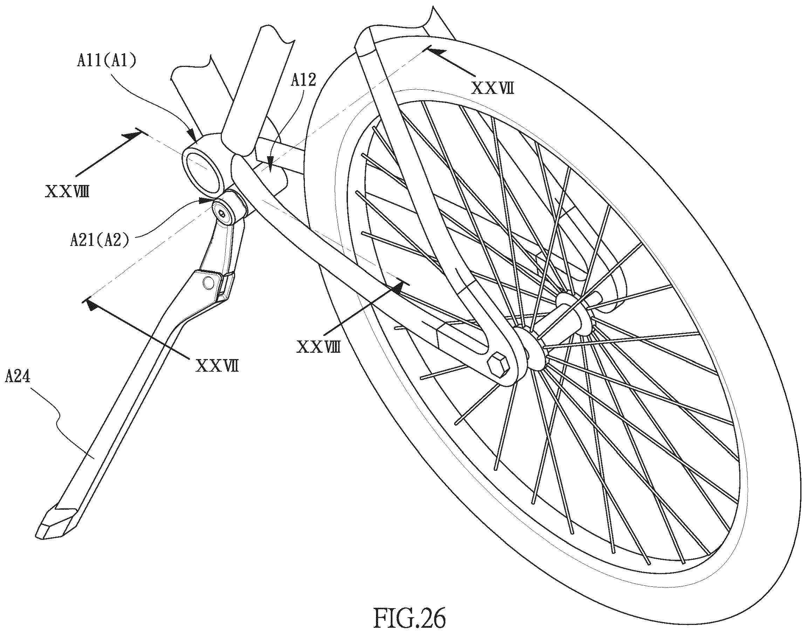

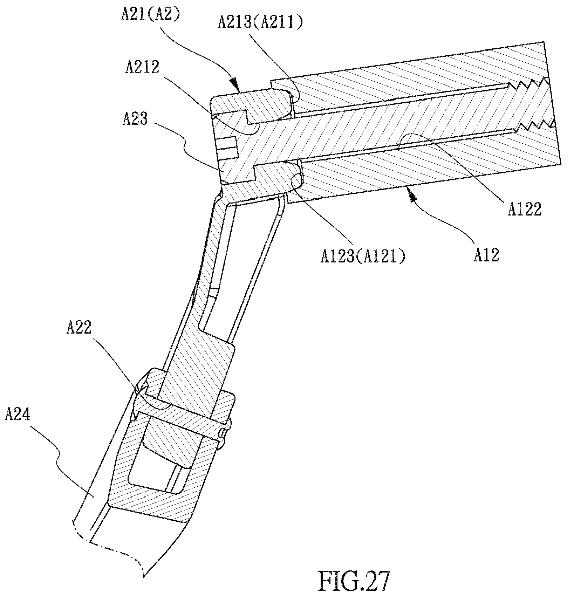

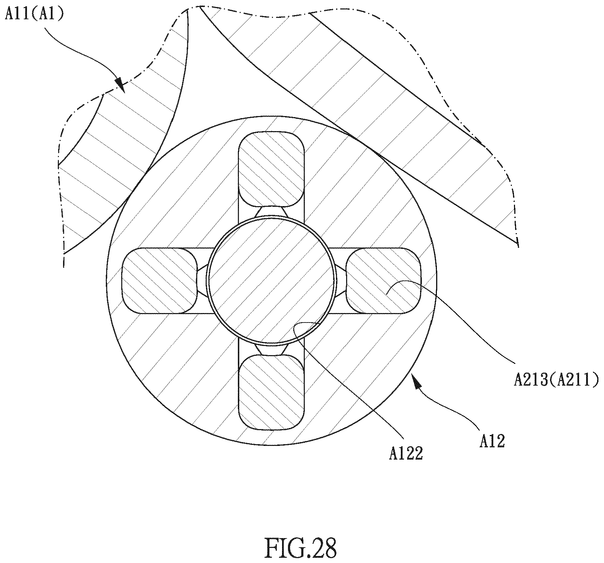

Please refer to Figs. 24 to 28, which show a fourth embodiment of the present invention. the four embodiment is a parking post fastening structure configured to mount on the bicycle frame A1. The parking post fastening structure includes a mounting part A2 and a parking post A24. The bicycle frame A1 includes a central shaft A11, the central shaft A11 includes an external assembly part A12 disposed on a side thereof, the external assembly part A12 has an end having an outer surface A121, and an assembly hole A122 axially cut through the outer surface A121. The outer surface A121 has recessed grooves A123 disposed thereon and arranged in interval on the peripheral side of the assembly hole A122.

The mounting part A2 is disposed on a side of the outer surface A121, and has a ring part A21 disposed on an end thereof and a pivot hole A22 formed on other end thereof. The ring part A21 has an inner surface A211 facing toward the outer surface A121, and an assembly hole A212 formed thereon and in communication with the inner surface A211. The inner surface A211 has stabilizing blocks A213 disposed on a side of the assembly hole A212 and arranged in interval. The stabilizing blocks A213 correspond in position to the recessed grooves A123 and located in the recessed grooves A123, respectively.

The parking post fastening structure includes a fastener A23 inserted through the assembly hole A122 and the assembly hole A212 to fasten the mounting part A2 on the external assembly part A12. In addition, the parking post A24 is pivoted in the pivot hole A22.

As shown in Figs. 24 to 28, each of the recessed grooves A123 of this embodiment is recessed in a shape gradually narrowed in a direction opposite to the outer surface A121, each of the stabilizing blocks A213 is gradually narrowed in a direction opposite to the inner surface A211, so that this structure prevents the mounting part A2 and the external assembly part A12 from being separated in structure during vibration, thereby improving the durability of combination of the mounting part A2 and the external assembly part A12.

Furthermore, as shown in Figs. 24 to 28, the recessed grooves A123 of this embodiment are in communication with the assembly hole A122, and parts of the stabilizing blocks A213 are connected to the assembly hole A212, so that this structure is able to make the stabilizing block A213 be stably inserted in the recessed groove A123 to increase the stability of the combination of the mounting part A2 and the external assembly part A12, when the fastener A23 is inserted through the assembly hole A122 and the assembly hole A212.

In practical use, as shown in Figs. 24 to 28, a user first places the stabilizing blocks A213 of the mounting part A2 into the recessed grooves A123 on the outer surface A121 of the external assembly part A12, and attaches the outer surface A121 with the inner surface A211; next, the user inserts the fastener A23 through the assembly hole A122 of the external assembly part A12 and the assembly hole A212 of the ring part A21, to stably fasten the mounting part A2 on the external assembly part A12. Therefore, when the user frequently kicks the parking post A24 pivoted in the pivot hole A22 for a long time, the combination of the stabilizing block A213 and the recessed groove A123 decreases the vibration separation force applied on the mounting part A2 and the external assembly part A12, so as to prevent the mounting part A2 and the external assembly part A12 from being separated easily, thereby improving the durability and the lifetime of a bicycle accessory fastening structure of the present invention.

The present invention disclosed herein has been described by means of specific embodiments. However, numerous modifications, variations and enhancements can be made thereto by those skilled in the art without departing from the spirit and scope of the disclosure set forth in the claims.

## Claims

1. A bicycle accessory fastening structure configured to mount to a bicycle frame (1), wherein the bicycle frame (1) comprises a first hook part (11) and a second hook part (12), the first hook part (11) has an outer surface (111) facing toward outside, and an assembly hole (112) cut through the outer surface (111), the outer surface (111) has recessed grooves (113) arranged in interval on a peripheral side of the assembly hole (112), wherein the bicycle accessory fastening structure comprises:
a mounting part (2), disposed on an outer side of the outer surface (111), and comprising a ring part (21) disposed on an end thereof and a pivot hole (22) formed on other end thereof, wherein the ring part (21) comprises an inner surface (211) facing toward the outer surface (111), an assembly hole (212) formed thereon and in communication with the inner surface (211), and stabilizing blocks (213) disposed on the inner surface (211) and arranged in interval on a peripheral side of the assembly hole (212), and the stabilizing blocks (213) correspond in position to the recessed grooves (113) and are located in the recessed grooves (113), respectively;
a through shaft (3), inserted through the assembly hole (212) and the assembly hole (112), so as to assemble the mounting part (2) with the first hook part (11); and
a parking post (23), pivoted in the pivot hole (22).

2. The bicycle accessory fastening structure according to claim 1, wherein the recessed groove (113) is recessed and in a shape gradually narrowed in a direction opposite to the outer surface (111), and the stabilizing block (213) is gradually narrowed in a direction opposite to the inner surface (211).

3. The bicycle accessory fastening structure according to claim 1, wherein the recessed grooves (113) are in communication with the assembly hole (112), and parts of the stabilizing blocks (213) are connected to the assembly holes (212), respectively.

4. A bicycle accessory fastening structure, configured to mount to a bicycle frame (4), wherein the bicycle frame (4) comprises an external part (41) disposed thereon, the external part (41) has a first assembly surface (411), and an assembly hole (412) disposed thereon, the first assembly surface (411) has recessed grooves (413) disposed thereon and arranged in interval on a peripheral side of the assembly hole (412), wherein the bicycle accessory fastening structure comprises:
a mounting part (5), disposed on a side of the first assembly surface (411), and comprising a ring part (51) disposed on an end thereof and a pivot hole (52) formed on other end thereof, wherein the ring part (51) comprises an second assembly surface (511) facing toward the first assembly surface (411), and an assembly hole (512) formed thereon and in communication with the second assembly surface (511), the second assembly surface (511) has stabilizing blocks (513) disposed on a side of the assembly hole (512) and arranged in interval, and the stabilizing blocks (513) correspond in position to the recessed grooves (613) and are located in the recessed grooves (613), respectively;
a fastener (54), inserted through the assembly hole (412) and the assembly hole (512), to fasten the mounting part (5) on the external part (41); and
a parking post (53), pivoted in the pivot hole (52).

5. The bicycle accessory fastening structure according to claim 4, wherein the recessed groove (413) is in a shape recessed and gradually narrowed in a direction opposite to the first assembly surface (411), the stabilizing block (513) is gradually narrowed in a direction opposite to the second assembly surface (511).

6. A bicycle accessory fastening structure, configured to mount to a bicycle frame (6), wherein the bicycle frame (6) comprises a first hook part (61) and a second hook part (62), each of the first hook part (61) and the second hook part (62) comprises an outer surface (611) facing toward outside, and an assembly hole (612) cut through the outer surface (611), the outer surface (611) has recessed grooves (613) arranged in interval on a peripheral side of the assembly hole (612), wherein the bicycle accessory fastening structure comprises:
a rear shelf (7), comprising a first assembly part (71) and a second assembly part (72), wherein each of the first assembly part (71) and the second assembly part (72) comprises an inner surface (711) facing toward a corresponding one of the outer surfaces (611), and an assembly hole (712) cut through the inner surface (711), wherein the inner surface (711) has stabilizing blocks (713) arranged in interval on the peripheral side of the assembly hole (712), the stabilizing blocks (713) correspond in position to the recessed grooves (613) and are located in the recessed grooves (613), respectively; and
a through shaft (8), inserted through the assembly hole (712) and the assembly hole (612), and the first assembly part (71) and the second assembly part (72) are assembled with the first hook part (61) and the second hook part (62).

7. The bicycle accessory fastening structure according to claim 6, wherein one of the first assembly part (71) and the second assembly part (72) comprises an extension part (74), the extension part (74) has an end connected to a corresponding one of the first assembly part (71) and the second assembly part (72), and a pivot hole (741) formed on other end thereof, and the rear shelf (7) comprises a parking post (75) pivoted in the pivot hole (741).

8. The bicycle accessory fastening structure according to claim 6, wherein each of the recessed grooves (613) is recessed in a shape gradually narrowed in a direction opposite to the outer surface (611), and each of the stabilizing blocks (713) is gradually narrowed in a direction opposite to the inner surface (711).

9. The bicycle accessory fastening structure according to claim 6, wherein the recessed grooves (613) are in communication with the assembly hole (612), and parts of the stabilizing blocks (713) are connected to the assembly hole (712).

10. A bicycle accessory fastening structure, configured to mount to a bicycle frame (A1), wherein the bicycle frame (A1) comprises an central shaft (A11), the central shaft (A11) comprises an external assembly part (A12) disposed on a side thereof, the external assembly part (A12) has an end having an outer surface (A121), and an assembly hole (A122) axially cut through the outer surface (A121), and the outer surface (A121) has recessed grooves (A123) disposed thereon and arranged in interval on the peripheral side of the assembly hole (A122), wherein the bicycle accessory fastening structure comprises:
a mounting part (A2), disposed on a side of the outer surface (A121), and comprising a ring part (A21) disposed on an end thereof, and a pivot hole (A22) formed on other end thereof, wherein the ring part (A21) has an inner surface (A211) facing toward the outer surface (A121), and an assembly hole (A212) formed thereon and in communication with the inner surface (A211), the inner surface (A211) has stabilizing blocks (A213) disposed on a side of the assembly hole (A212) and arranged in interval, the stabilizing blocks (A213) correspond in position to the recessed grooves (A123) and located in the recessed grooves (A123), respectively;
a fastener (A23), inserted through the assembly hole (A122) and the assembly hole (A212), to fasten the mounting part (A2) on the external assembly part (A12); and
a parking post (A24), pivoted in the pivot hole (A22).

11. The bicycle accessory fastening structure according to claim 10, wherein each of the recessed grooves (A123) is recessed in a shape gradually narrowed in a direction opposite to the outer surface (A121), and each of the stabilizing blocks (A213) is gradually narrowed in a direction opposite to the inner surface (A211).

12. The bicycle accessory fastening structure according to claim 10, wherein the recessed grooves (A123) are in communication with the assembly hole (A122), and parts of the stabilizing blocks (A213) are connected to the assembly hole (A212).

## Amended claims

### Amended claims in accordance with Rule 137(2) EPC.

1. A bicycle comprising a bicycle frame and a bicycle accessory fastening structure configured to mount to the bicycle frame (1), wherein the bicycle frame (1) comprises a first seat stay-base stay linking part (11) and a second seat stay-base stay linking part (12), the first seat stay-base stay linking part (11) has an outer surface (111) facing toward outside, and an assembly hole (112) cut through the outer surface (111), the outer surface (111) has recessed grooves (113) arranged in interval on a peripheral side of the assembly hole (112), wherein the bicycle accessory fastening structure comprises:
a mounting part (2), disposed on an outer side of the outer surface (111), and comprising a ring part (21) disposed on an end thereof and a pivot hole (22) formed on other end thereof, wherein the ring part (21) comprises an inner surface (211) facing toward the outer surface (111), an assembly hole (212) formed thereon and in communication with the inner surface (211), and stabilizing blocks (213) disposed on the inner surface (211) and arranged in interval on a peripheral side of the assembly hole (212), and the stabilizing blocks (213) correspond in position to the recessed grooves (113) and are located in the recessed grooves (113), respectively;
a through shaft (3), inserted through the assembly hole (212) and the assembly hole (112), so as to assemble the mounting part (2) with the first seat stay-base stay linking part (11); and
a parking post (23), pivoted in the pivot hole (22).

2. The bicycle accessory fastening structure according to claim 1, wherein the recessed groove (113) is recessed and in a shape gradually narrowed in a direction opposite to the outer surface (111), and the stabilizing block (213) is gradually narrowed in a direction opposite to the inner surface (211).

3. The bicycle accessory fastening structure according to claim 1, wherein the recessed grooves (113) are in communication with the assembly hole (112), and parts of the stabilizing blocks (213) are connected to the assembly holes (212), respectively.

4. A bicycle comprising a bicycle frame and a bicycle accessory fastening structure, configured to mount to the bicycle frame (4), wherein the bicycle frame (4) comprises an external part (41) disposed thereon, the external part (41) has a first assembly surface (411), and an assembly hole (412) disposed thereon, the first assembly surface (411) has recessed grooves (413) disposed thereon and arranged in interval on a peripheral side of the assembly hole (412), wherein the bicycle accessory fastening structure comprises:
a mounting part (5), disposed on a side of the first assembly surface (411), and comprising a ring part (51) disposed on an end thereof and a pivot hole (52) formed on other end thereof, wherein the ring part (51) comprises an second assembly surface (511) facing toward the first assembly surface (411), and an assembly hole (512) formed thereon and in communication with the second assembly surface (511), the second assembly surface (511) has stabilizing blocks (513) disposed on a side of the assembly hole (512) and arranged in interval, and the stabilizing blocks (513) correspond in position to the recessed grooves (613) and are located in the recessed grooves (613), respectively;
a fastener (54), inserted through the assembly hole (412) and the assembly hole (512), to fasten the mounting part (5) on the external part (41); and
a parking post (53), pivoted in the pivot hole (52).

5. The bicycle accessory fastening structure according to claim 4, wherein the recessed groove (413) is in a shape recessed and gradually narrowed in a direction opposite to the first assembly surface (411), the stabilizing block (513) is gradually narrowed in a direction opposite to the second assembly surface (511).

6. A bicycle comprising a bicycle frame and a bicycle accessory fastening structure, configured to mount to the bicycle frame (6), wherein the bicycle frame (6) comprises a first seat stay-base stay linking part (61) and a second seat stay-base stay linking part (62), each of the first seat stay-base stay linking part (61) and the second seat stay-base stay linking part (62) comprises an outer surface (611) facing toward outside, and an assembly hole (612) cut through the outer surface (611), the outer surface (611) has recessed grooves (613) arranged in interval on a peripheral side of the assembly hole (612), wherein the bicycle accessory fastening structure comprises:
a rear shelf (7), comprising a first assembly part (71) and a second assembly part (72), wherein each of the first assembly part (71) and the second assembly part (72) comprises an inner surface (711) facing toward a corresponding one of the outer surfaces (611), and an assembly hole (712) cut through the inner surface (711), wherein the inner surface (711) has stabilizing blocks (713) arranged in interval on the peripheral side of the assembly hole (712), the stabilizing blocks (713) correspond in position to the recessed grooves (613) and are located in the recessed grooves (613), respectively; and
a through shaft (8), inserted through the assembly hole (712) and the assembly hole (612), and the first assembly part (71) and the second assembly part (72) are assembled with the first seat stay-base stay linking part (61) and the second seat stay-base stay linking part (62).

7. The bicycle accessory fastening structure according to claim 6, wherein one of the first assembly part (71) and the second assembly part (72) comprises an extension part (74), the extension part (74) has an end connected to a corresponding one of the first assembly part (71) and the second assembly part (72), and a pivot hole (741) formed on other end thereof, and the rear shelf (7) comprises a parking post (75) pivoted in the pivot hole (741).

8. The bicycle accessory fastening structure according to claim 6, wherein each of the recessed grooves (613) is recessed in a shape gradually narrowed in a direction opposite to the outer surface (611), and each of the stabilizing blocks (713) is gradually narrowed in a direction opposite to the inner surface (711).

9. The bicycle accessory fastening structure according to claim 6, wherein the recessed grooves (613) are in communication with the assembly hole (612), and parts of the stabilizing blocks (713) are connected to the assembly hole (712).

10. A bicycle comprising a bicycle frame and a bicycle accessory fastening structure, configured to mount to the bicycle frame (A1), wherein the bicycle frame (A1) comprises an central shaft (A11), the central shaft (A11) comprises an external assembly part (A12) disposed on a side thereof, the external assembly part (A12) has an end having an outer surface (A121), and an assembly hole (A122) axially cut through the outer surface (A121), and the outer surface (A121) has recessed grooves (A123) disposed thereon and arranged in interval on the peripheral side of the assembly hole (A122), wherein the bicycle accessory fastening structure comprises:
a mounting part (A2), disposed on a side of the outer surface (A121), and comprising a ring part (A21) disposed on an end thereof, and a pivot hole (A22) formed on other end thereof, wherein the ring part (A21) has an inner surface (A211) facing toward the outer surface (A121), and an assembly hole (A212) formed thereon and in communication with the inner surface (A211), the inner surface (A211) has stabilizing blocks (A213) disposed on a side of the assembly hole (A212) and arranged in interval, the stabilizing blocks (A213) correspond in position to the recessed grooves (A123) and located in the recessed grooves (A123), respectively;
a fastener (A23), inserted through the assembly hole (A122) and the assembly hole (A212), to fasten the mounting part (A2) on the external assembly part (A12); and
a parking post (A24), pivoted in the pivot hole (A22).

11. The bicycle accessory fastening structure according to claim 10, wherein each of the recessed grooves (A123) is recessed in a shape gradually narrowed in a direction opposite to the outer surface (A121), and each of the stabilizing blocks (A213) is gradually narrowed in a direction opposite to the inner surface (A211).

12. The bicycle accessory fastening structure according to claim 10, wherein the recessed grooves (A123) are in communication with the assembly hole (A122), and parts of the stabilizing blocks (A213) are connected to the assembly hole (A212).
